# EUROPEAN PATENT APPLICATION

(11) **EP 4 303 730 A1**
(43) Date of publication of application: **10.01.2024**
(21) Application number: 22305998.1
(22) Date of filing: 04.07.2022
(51) Int. Cl.: G06F 11/07, G06F 11/30, G06F 11/34, G06N 3/02

(54) **COMPUTER-IMPLEMENTED METHOD FOR AUTOMATICALLY DETECTING ANOMALIES IN A CLOUD INFRASTRUCTURE COMPRISING MICROSERVICES**

(71) Applicant: Packetai, 94160 Saint-Mande (FR)
(72) Inventor: AZZOUNI, Abdelhadi, 75013 Paris (FR); LAPPAROV, Valentin, 75015 Paris (FR); GANJI, Rama Rao, 75013 Paris (FR)
(74) Representative: Cabinet Nony

(57) **Abstract**

Computer-implemented method for automatically detecting anomalies in a cloud infrastructure comprising one or more microservices, each microservice comprising one or more containers, each container having a plurality of metrics of different types and relative to the state of said container, the method comprising the following steps:
a. for a first given microservice, grouping all alive containers associated to said first microservice,
b. choose a type of metric and aggregate at least one metric relative to each previously grouped container to get a unique aggregated metric of this type of metric,
c. monitoring the evolution of said at least one aggregated metric, and
d. emit an alert at least if, while monitoring the evolution of said at least one aggregated metric, a value thereof is determined to be outside a predefined range of values.

## Description

### Technical field

A cloud infrastructure is a complex and dynamic infrastructure that comprises a high number of components and generates a large amount of data.

A cloud infrastructure may comprise microservices. In this kind of infrastructure, each microservice comprises one or more container(s). A container is an atomic compute component that is meant to perform atomic tasks.

The deployment of such cloud infrastructure comprising containers is managed by a container orchestrator which is a software that enables the management of the lifecycle of the container (creation, resizing and/or destruction of containers) and the management of the container's allocation which is the attribution to a specific microservice. An example of such an orchestrator is KUBERNES^{®}. The container orchestrator also allows the monitoring of the infrastructure by collecting container's data and exposing it via an application programming interface (API).

Cloud infrastructures comprising containers are characterized by their dynamism and the ephemerality of containers. Containers are created and destroyed dynamically based on workload and usage. For example, during peak traffic hours, a cloud infrastructure expands by creating more containers to handle more traffic. Similarly, during low traffic hours, for example during the night, the number of containers shrinks in order to save compute power. This automatic creation and destruction of containers is called auto-scaling, which enables more granular management of compute capacity. It also saves costs that would incur from overprovisioned idle resources.

A way of monitoring a cloud infrastructure, and in particular to detect anomalies, is to monitor metrics.

Yet, monitoring auto-scaling cloud infrastructures is complex due to their dynamic nature. Indeed, since a container is ephemeral, once a container is destroyed, its data disappears, and it is no longer possible to monitor metrics associated with this container. However, this does not mean that the associated task is done, it only means that the particular container is not needed anymore, and the same related task may well be continued by other containers.

### Prior art

Anomaly detection methods based on metrics monitoring are known for IT infrastructures that may be applied to cloud infrastructures comprising microservices. However, these systems are conceived to work on hand-picked individual metrics. The user needs to define what metrics are interesting to monitor then individually apply some models to them in order to detect anomalies.

For example, it is possible for monitoring a cloud infrastructure to set up an anomaly detection model to detect anomalies on a specific container's central processing unit (CPU) usage. The model would learn the normal behaviour of the container's CPU and send alerts whenever there is a deviation from this normal behaviour.

The drawback of this approach is that it is not scalable. Indeed, when a container is destroyed, the container's metrics disappear, rendering the monitor useless, and leads to resource waste as well as potential false alarms. For example, the value of the container's CPU would just disappear after container's destruction, either generating an error or leading to the monitor firing false alarms. Even if the monitor eventually is adapted to consider the 0 value as normal, it would still waste compute resources.

Another major drawback of this approach is that the number of containers is usually very high, leading to impractical costs for the anomaly detection method.

This method of manually setting up detection model for each metrics needed to be monitored is not compatible with a cloud infrastructure comprising microservices.

There is a need to further improve automatic detection of anomalies in a cloud infrastructure comprising microservices. In particular, there is a need for obtaining a more scalable model.

The present invention notably seeks to meet this need.

### Disclosure of the invention

One subject of the invention is a computer-implemented method for automatically detecting anomalies in a cloud infrastructure comprising one or more microservices, each microservice comprising one or more containers, each container having a plurality of metrics of different types and relative to the state of said container, the method comprising the following steps:
a. for a first given microservice, grouping all alive containers associated to said first micro service,
b. choose a type of metric and aggregate at least one metric relative to each previously grouped container to get a unique aggregated metric of this type of metric,
c. monitoring the evolution of said at least one aggregated metric, and
d. emit an alert at least if, while monitoring the evolution of said at least one aggregated metric, a value thereof is determined to be outside a predefined range of values.

The computer implemented method according to the invention allows detecting anomalies in a microservice deployment and not in each individual container of said microservice. The method is thus more scalable than the known methods of the prior art. Moreover, the method according to the invention is agnostic to the underlying containers of each microservice and to their life cycles.

In the method according to the invention, the evolution of an aggregated metric is monitored instead of monitoring individually metrics of each container. By monitoring aggregated metrics, the method is not disturbed by automatic termination or creation of containers that may trigger error in the anomaly detection method. The method according to the invention has a good elasticity and may be automatically adapted to all size of cloud infrastructure.

The values of the predefined range of values may be expected values computed beforehand.

The method according to the invention can be implemented by a computer in the broadest sense, i.e. by any electronic system, which may include a set of several machines and have computer processing capabilities. Classically, a computer comprises a processor, a memory, a humanmachine interface, for example a keyboard, a mouse or a touch screen, a screen and a communication module, in particular Ethernet, WIFI, Bluetooth^{®} or using a mobile telephone technology, for example a technology operating with the GSM, GPRS, EDGE, LTE or UMTS protocols.

By *"cloud infrastructure",* we designate a set of components that communicates via a network which can be the internet or can be a private intranet. The method according to the invention is mostly dedicated to cloud infrastructure comprising microservices.

By *"microservice",* we designate a component of the cloud architecture that is configured to execute one function. A microservice is usually written in a single programming language and using a single technology. A microservice may also correspond to business services built as microservices. A microservice is developed using one or more container(s).

By *"container",* we designate a component of the cloud architecture that is configured to perform a task that participates to the realization of the microservice function.

By *"auto-scaling",* we designate the capability of a cloud infrastructure to automatically destroy and/or create containers to adapt the compute power to the need at a given moment.

The step of grouping containers associated to said first microservice may comprise the following steps:
i. for at least a part of the containers, better for all the containers, determine the programming language and/or the technology of each container, and
ii. group together containers having the same programming language and/or the same technology.
Preferably, the programming language and/or the technology of all the containers is determined.

Containers implementing a microservice share the same underlying programming language and/or technology. Grouping containers by programming language and/or by technology allows to simply realize a first sort of containers according to the microservice they are associated to. There is no need to access external meta-configuration files of the cloud infrastructure. The method according to the invention is therefore easily compatible with any cloud infrastructure.

In one embodiment, the programming language and/or the technology may be determined by crafting special queries and sending them to open ports of the target process. This technique is based on constructing a database of technology fingerprints and using them for detection. For example, it is possible to perform a banner grab which is performed by crafting and sending an HTTP request to the web server and examining its response header. This can be accomplished using a variety of tools, including telnet for HTTP requests, or openssl for requests over SSL. In another example, the programming language and/or the technology may be identified by examining the error response and/or the default error pages of the web servers. One way to compel a server to present an error response and/or a default error page is by crafting and sending intentionally incorrect or malformed requests.

In another embodiment, the programming language and/or the technology may be determined by parsing configuration files. This method includes first looking for configuration files in default repositories that may match a process name, then parsing the configuration files to confirm the technology or programming language. For example, if the name of the process is mongo-^{∗}, one way to confirm that it is a mongodb database process is to first search for /etc/mongod.conf. If the file exists, then it is parsed to see if it conforms to a default configuration file of a mongodb database. Further information about the exact mongodb version could be extracted from the config file.

The step of grouping containers associated to said first microservice may comprise the following steps:
i. for at least a part of the containers, better for all the containers, detect at least one tag identifying which microservice this container is associated to, and
ii. group together containers having the same tag.

By detecting tags identifying which microservice a container is associated to, it is possible to sort containers and to group those who are associated to a same microservice.

A tag identifying which microservice a container is associated to may be a process name and/or one or more container's meta-data.

Process name may be obtained by using an OS kernel command or by running one or more fingerprinting tests.

Container's meta-data may include one or more of the following: image name, image version, repository name.

Determination by using process name and by using meta-data may be used to increase the accuracy of the result.

Under certain circumstances, the tag identifying which microservice a container is associated to may not be available or those tags may be attributed by engineers which is source of potential mistakes. Thus, because this information is not available, the sorting of all the containers is not possible by applying this method.

It may also be possible that two microservices share the same combination of programming language and technology. In this case, grouping all containers associated to one microservice for each microservice is not possible.

That is why, in a preferred embodiment, the two grouping methods described above are consecutively performed.

Preferably, the step of grouping containers associated to said first microservice comprises the following steps:
i. for at least a part of the containers, better for all the containers, determine the programming language and the technology of each container,
ii. for said at least a part of the containers, better for, detect at least one tag identifying which microservice this container is associated to, and
iii. group together containers having the same programming language, the same technology and the same tag.

By using consecutively two different methods for grouping containers, the risk of not being able to sort all containers and to group them by microservice is reduced.

In addition, the method may include the step of inviting the user to confirm the sorting of the containers. This invitation may be a message printed on the user interface.

The step of monitoring the evolution of said at least one aggregated metric may be performed by comparing the value of said at least one aggregated metric to a predetermined threshold, an alert being emitted if said value is greater or smaller than said predetermined threshold.

This monitoring method is easy to perform because it only needs to predetermine a threshold and to monitor the value on the aggregated value relatively to it. This method is economic and easy to implement.

The step of monitoring the evolution of said at least one aggregated metric may be performed by applying a statistical algorithm to the values of said at least one aggregated metric.

For example, the statistical algorithm may evaluate the similarity of the value of the aggregated metrics to the other values and if a value is significantly different then an aggregated metric is declared as an anomaly and an alert is emitted.

The step of monitoring the evolution of said at least one aggregated metric may be performed by transmitting values of said at least one aggregated metric to a regression model or a model trained beforehand on previously acquired aggregated metrics, an alert being emitted if said values deviate from the values of said previously acquired aggregated metrics.

For example, the model used may be a moving average model over a predetermined number of past days. This model may use a sliding window and calculate the average value of all values of the aggregated metric over the past days, for example over the past seven days. The calculated average value is compared with the next value of the aggregated metric. If the value of the next aggregated metric is significantly far from the calculated average value, then the algorithm generates an anomaly alert.

The model trained beforehand may be a neural network.

For example, a neural network may be trained on previously acquired normal values of the said aggregated metric. The neural network is tasked with predicting the next value of the said aggregated metric based on the learned characteristics of its normal values. If the actual measured aggregated metric value is significantly different from the predicted value, then the model fires an anomaly alert.

The model trained beforehand may be configured to emit an alert if an anomaly is detected in the evolution of the value of the aggregated metrics.

Using a model trained beforehand allows detecting a deviation of the evolution of the value of an aggregated metric without necessitating a predetermined threshold.

The metrics may be incremental metrics or punctual metrics.

An incremental metric is defined as follows:
metric(t_x+1) = metric(t_x) + Δ, where Δ is the incremental value that metric gained.

A punctual metric is a metric in which there is no linear relationship between consecutive values.

The metrics may be chosen from the following: total CPU usage, CPU usage in user space, CPU usage in kernel space, memory usage, ratio of big memory pages, disk usage, number of write and read operations, volume of traffic entering via network, volume of traffic exiting via network, usage of cache memory, number of tables of a database, waiting time, latency, number of operations per unit of time, number of errors, queue size of a messaging broker, connection number to an API or database, large query number for a database, number of missed cache memory hits.

The list of metrics above is not exhaustive. Many metrics may be derived from the ones listed above may be chosen.

The computer-implemented method allows monitoring a lot of different metrics. It also allows monitoring all chosen metrics simultaneously.

The cloud infrastructure may perform at least 5 microservices, better at least 10 microservices, better at least 100 microservices, better at least 1 000 microservices, better at least 10 00 microservices, better at least 100 000 microservices, better at least 1.10⁶ microservices, better at least 1.10⁹ microservices, better at least 1.10¹² microservices.

Each microservice may be executed by one container, better by at least 5 containers, better by at least 10 containers, better by at least 100 containers, better by at least 1 000 containers, better by at least 10 00 containers, better by at least 100 000 containers, better by at least 1.10⁶ containers, better by at least 1.10⁹ containers.

The method according to the invention is adapted to cloud infrastructures comprising a high number of microservices and containers.

The method may be performed without accessing to external meta-configuration file(s) of the cloud infrastructure.

Therefore, the set-up of the system used to perform the method is simplified.

According to another one of its aspects, the invention also relates to a system for automatically detecting anomalies in a cloud infrastructure performing one or more microservices, the system being adapted to perform the method according to the invention.

According to another one of its aspects, the invention also relates to a computer program comprising instructions which, when the program is executed on a computer, cause the computer to carry out the steps of the method according to the invention.

### Brief description of the drawings

The invention may be better understood upon reading the following detailed description of nonlimiting implementation examples thereof and on studying the appended drawing, in which:
figure 1 is a diagram illustrating the architecture of an example of a cloud infrastructure, and
figure 2 is a block diagram illustrating an example of different steps of the method according to the invention.

### Detailed description

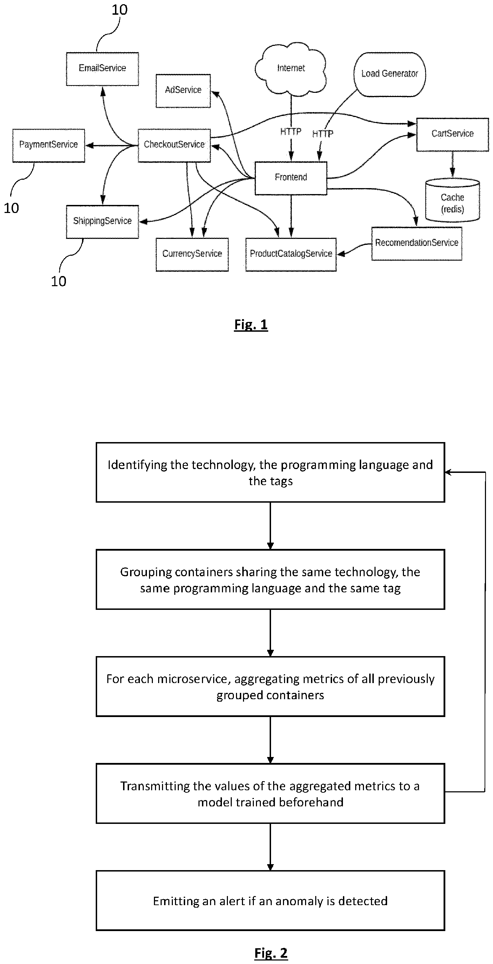

Figure 1 illustrates an example of a cloud infrastructure comprising several microservices 10. Each microservice comprises one or more containers that are not represented. Moreover, each container comprises a plurality of metrics of different types and relative to its state.

The number of containers associated to one microservice may vary over time and therefore the number of metrics that can be evaluated varies also over time.

For each container we can store the values of the metrics in a vector. This means that the size of the vector will not be constant over time.

For example, we consider a microservice comprising 10 containers at an instant To, then the number of containers increases to 20 containers at a further instant T₁ and then it decreases to 5 containers at a further instant T₂. We also consider that each container comprises 8 metrics.

Therefore, the size of the vector used as input to an anomaly detection model varies as follow:
- at T₀ the input vector's size has to be at least 10^{∗}8=80,
- at T₁ the input vector's size has to be at least 20^{∗}8=160,
- at T₂ the input vector's size has to be at least 5^{∗}8=40.

In the prior art method, the value of the metrics corresponding to containers that do not exist anymore is set to 0. Thus, the anomaly detection models would perform inference on 160-80=80 times series with constant value of 0 which is a waste of calculation resources.

The method according to the invention allows avoiding this waste.

The main steps of the method according to the invention are illustrated in the block diagram of figure 2.

The first step is to identify the programming language and the technology of each container. When it is available, the tag identifying which microservice this container is associated to is also read.

Based on that information, containers sharing the same technology, the same programming language and the same tag are grouped. By doing this, the method is able to identify all containers that each microservice comprises.

Then, for each microservice to be monitored, the metrics of all the containers associated to that microservice are aggregated to get a unique value. Then, there is only one value for which we need to monitor the evolution.

After the aggregation of the metrics, the obtained value is transmitted to a model trained beforehand.

Those steps are repeated over time, and the successive values of the aggregated metric are transmitted to the model. If the evolution is abnormal compared to the scheme of evolution the model has previously learnt, an alert is emitted.

Those steps can be applied to all metrics we want to monitor. Each metric can be transmitted to a specific model trained beforehand.

As an example, we want to monitor the CPU usage metric. We consider that each container has only one CPU usage metric. During daytime, the aggregated CPU usage value of a given microservice is the mean of 20 CPU usage values. During night-time, the aggregated CPU usage value is the mean of 5 CPU usage values. In either case, there is only one value to monitor.

The invention is not limited to the examples that have just been described. For example, different models trained beforehand may be applied to the aggregated metrics according to the invention.

## Claims

1. Computer-implemented method for automatically detecting anomalies in a cloud infrastructure comprising one or more microservices, each microservice comprising one or more containers, each container having a plurality of metrics of different types and relative to the state of said container, the method comprising the following steps:
a. for a first given microservice, grouping all alive containers associated to said first microservice,
b. choose a type of metric and aggregate at least one metric relative to each previously grouped container to get a unique aggregated metric of this type of metric,
c. monitoring the evolution of said at least one aggregated metric, and
d. emit an alert at least if, while monitoring the evolution of said at least one aggregated metric, a value thereof is determined to be outside a predefined range of values.

2. Computer-implemented method as claimed in claim 1, the step of grouping containers associated to said first microservice comprising the following steps:
i. for at least a part of the containers, better for all the containers, determine the programming language and/or the technology of each container, and
ii. group together containers having the same programming language and/or the same technology.

3. Computer-implemented method as claimed in any one of the preceding claims, the step of grouping containers associated to said first microservice comprising the following steps:
i. for at least a part of the containers, better for all the containers associated to said first microservice, detect at least one tag identifying which microservice this container is associated to, and
ii. group together containers having the same tag.

4. Computer-implemented method as claimed in claim 1, the step of grouping containers associated to said first microservice comprising the following steps:
i. for at least a part of the containers, better for all the containers, determine the programming language and the technology of each container,
ii. for said at least a part of the containers, better for all the containers associated, detect at least one tag identifying which microservice this container is associated to, and
iii. group together containers having the same programming language, the same technology and the same tag.

5. Computer-implemented method as claimed in any one of the preceding claims, the step of monitoring the evolution of said at least one aggregated metric being performed by comparing the value of said at least one aggregated metric to a predetermined threshold, an alert being emitted if said value is greater or smaller than said predetermined threshold.

6. Computer-implemented method as claimed in any one of the preceding claims, the step of monitoring the evolution of said at least one aggregated metric being performed by applying a statistical algorithm to the values of said at least one aggregated metric.

7. Computer-implemented method as claimed in any one of the preceding claims, the step of monitoring the evolution of said at least one aggregated metric being performed by transmitting values of said at least one aggregated metric to a model trained beforehand on previously acquired aggregated metrics, an alert being emitted if said values deviate from the values of said previously acquired aggregated metrics.

8. Computer-implemented method as claimed in any one of the preceding claims, the metrics being incremental metrics or punctual metrics.

9. Computer-implemented method as claimed in any one of the preceding claims, the metrics being chosen from the following: total CPU usage, CPU usage in user space, CPU usage in kernel space, Memory usage, ratio of big memory pages, disk usage, number of write and read operations, volume of traffic entering via network, volume of traffic exiting via network, usage of cache memory, number of tables of a database, waiting time, latency, number of operations per unit of time, number of errors, queue size of a messaging broker, connection number to an API or database, large query number for a database, number of missed cache memory hits.

10. Computer-implemented method as claimed in any one of the preceding claims, the cloud infrastructure performing at least 5 microservices, better at least 10 microservices, better at least 100 microservices, better at least 1 000 microservices, better at least 10 00 microservices, better at least 100 000 microservices, better at least 1.10⁶ microservices, better at least 1.10⁹ microservices, better at least 1.10¹² microservices.

11. Computer-implemented method as claimed in any one of the preceding claims, each microservice being executed by one container, better by at least 5 containers, better by at least 10 containers, better by at least 100 containers, better by at least 1 000 containers, better by at least 10 00 containers, better by at least 100 000 containers, better by at least 1.10⁶ containers, better by at least 1.10⁹ containers.

12. Computer-implemented method as claimed in any one of the preceding claims, the method being perform without accessing to configuration file(s) of the cloud infrastructure.

13. System for automatically detecting anomalies in a cloud infrastructure performing one or more microservices, the system being adapted to perform the method according to any one of the preceding claims.

14. A computer program comprising instructions which, when the program is executed on a computer, cause the computer to carry out the steps of the method according to any one of claims 1 to 12.
